# EUROPÄISCHE PATENTSCHRIFT

(11) **EP 0 263 436 B1**
(45) Veröffentlichungstag und Bekanntmachung des Hinweises auf die Patenterteilung: **17.11.1994**
(21) Anmeldenummer: 87114329.3
(22) Anmeldetag: 01.10.1987
(51) Int. Cl.: C04B 28/18, C04B 38/00

(54) **Formkörper für Wärmeisolationszwecke und Verfahren zu seiner Herstellung**
Shaped article for heat insulation applications and process for its production
Corps moulé pour l'application comme isolation calorifuge et son procédé de fabrication

(30) Priorität: 07.10.1986 CH 4002/86
(43) Veröffentlichungstag der Anmeldung: 13.04.1988
(73) Patentinhaber: Calsitherm Silikatbaustoffe GmbH, D-33175 Bad Lippspringe (DE); Hölscher, Klaus, Dr., D-33175 Bad Lippspringe (DE)
(72) Erfinder: Ohnemüller, Walter, Dr., CH-8854 Galgenen (CH)
(74) Vertreter: Troesch Scheidegger Werner AG

(56) Entgegenhaltungen:
- EP-A- 0 064 916
- CH-B- 175 951
- DE-A- 1 927 947
- DE-A- 2 940 230
- DE-C- 2 953 526
- US-A- 2 240 963

## Beschreibung

Die Erfindung betrifft ein Verfahren zur Herstellung eines Formkörpers für Wärmeisolationszwecke, insbesondere zur Hochtemperaturisolation, dessen Matrix aus feinteiligem, hydrothermal erzeugtem Calciumhydrosilikat mit einer spezifischen Oberfläche von mindestens 20 m²/g besteht und Trübungsmittel enthält, wobei mit Wasserüberschuss gelöschtes Calciumoxid und Kieselsäure, sowie ein feinkörniges Trübungsmittel intensiv vermischt und einer Reaktion unterworfen werden und die dabei aus dem hydrothermal erzeugten feinteiligen Calicumhydrosilikat und dem Trübungsmittel gebildete Matrix in die gewünschte Form gebracht wird.

Die Grundherstellung hochporöser Formkörper ergibt sich aus CH-B-175 951, welche jedoch keine Vorkehren zur Verbesserung der Isolationseigenschaften erwähnt.

Die Herstellung und Verwendung von Calcium hydrosilikat-Wärmedämmstoffen, mit und ohne Faserarmierung, in Brandschutzkonstruktionen und zur Wärmeisolierung bis ca. 1100°C ist Stand der Technik. Erstmals wird in der DE-OS 2940 230 die Kombination von Calciumsilikat mit infrarotabsorbierenden Teilchen, sogenannten Trübungsmitteln, zur Verringerung der Wärmeleitfähigkeit beschrieben.

Alle anderen bekannten Verfahren, nach welchen handelsübliche Produkte mit geringer Wärmeleitfähigkeit unter Verwendung von Trübungsmitteln wie Ti0₂, Ilmenit oder SiC gefertigt werden, gehen von hochdisperser, amorpher Kieselsäure oder Tonerde aus.

Aufgabe der vorliegenden Erfindung ist es nun, ein gegenüber dem Stand der Technik noch verbesserte Isolationseigenschaften aufweisendes geformtes Isoliermaterial zu schaffen.

Diese Aufgabe wird bei einem Verfahren der eingangs definierten Art erfindungsgemäss dadurch gelöst, dass dem bei der genannten Reaktion erhaltenen Werkstoff ein zur Bildung von geschlossenzelligen Makroporen in der Grösse von 5 - 50 µ im Endprodukt geeigneter Stoff gleichmässig verteilt zugesetzt und das Ganze in einer Form derart verdichtet wird, dass der Festkörper des geformten Isoliermaterials eine Mikroporosität im Bereich unter 0,5 µ Porendurchmesser und das die Makroporen enthaltende Isoliermaterial eine Rohdichte von 0,15 - 0,6 g/cm³ erhält.

Die erfindungswesentlichen Makroporen, die zusammen mit den an sich bekannten Mikroporen und den Trübungsmitteln die angestrebte Verbesserung des gebildeten Produktes herbeiführen, können durch einen während der Herstellung beigegebenen Schaumbildner oder durch Zugabe von geschlossenzelligen Leichtzuschlägen gebildet werden.

Die Erfindung wir nachstehend noch etwas näher erläutert und anhand einiger Ausführungsbeispiele beschrieben.

Die Erfindung beschränkt sich zwar auf den Einsatz der Stoffgruppe der Calciumhydrosilikate, geht aber in der Berücksichtigung der den Wärmedurchgang von porösen Festkörpern beeinflussenden Faktoren einen Schritt weiter. Folgende Grundfaktoren wurden in die Ueberlegungen einbezogen:
1. Wärmeleitung in Festkörpern
2. Gaskonvektion in grossen Poren und offenporigen Systemen
3. Wärmeleitung in ruhender Luft
4. Infrarot-Wärmestrahlung
Der Erfolg der erfindungsgemäss aufgebauten Formkörper lässt sich unter Berücksichtigung vorstehender Faktoren wie folgt erklären:
Das Calciumhydrosilikat reduziert auf Grund seiner feinteiligen, nadelförmigen Einzelkristallausbildung die Wärmeleitung in an sich bekannter Weise, da nur eine einzelne punktweise Berührung der Festkörper erfolgt. Durch den erfindungsgemässen "Einbau" von geschlossenzelligen Makroporen entsteht eine besondere, mit einer zelligen Schaumstruktur vergleichbare räumliche Anordnung der Festkörper, was überraschenderweise zum angestrebten Ziel führte, indem der "Leitungsweg" der Wärme wie in einem Labyrinth verlängert wurde.

Durch dichte Packung der Festkörperteilchen in den Zellwänden wird der offene Porenraum je Zelle begrenzt. Die Temperaturdifferenz zweier gegenüberliegender Zellwände ist gering, wenn die Zelle klein genug ist.

Innerhalb der Zellwände selbst sind die Porenräume bereits so klein, dass Gasmoleküle in ihrer freien Beweglichkeit soweit eingeengt sind, dass eine Energieübertragung durch Stossimpulse unterbunden wird.

Poröse silikatische Festkörper sind mit steigender Temperatur zunehmend durchlässig für Infrarotstrahlung. Diesem Mangel wird bekanntermassen durch Zusatz infrarotabsorbierender oder reflektierender, feinteiliger oder flächiger Stoffe abgeholfen. Für niedrigere Temperaturen eignen sich metallische Plättchen oder Beschichtungen als Reflektoren, für hohe Temperaturen Metalloxide mit grossem Absorbtionsvermögen und hohem Brechungsindex.

Beim erfindungsgemässen Verfahren werden die vorgehend beschriebenen stofflichen Eigenschaften realisiert durch eine geeignete Rohstoffauswahl und nachfolgende stufenweise Behandlung. Die Hauptrohstoffe, frisch mit Wasserüberschuss gelöschtes Calciumoxid (z.B. Branntkalk) und Kieselsäure (z.B. Quarzmehl, Kieselgur, kondensierte oder pyrogene Kieselsäure) und das feinkörnige Trübungsmittel (z.B. TiO₂, als Rutil mit einer Teilchengrösse von 0,5 - 2 µ) werden bei Temperaturen unterhalb 100°C nach intensivem Rühren einer Vorreaktion unterworfen. Hierbei bildet sich ein gut schäumbares Gel aus. Als Schaumbildner zur Bildung der Makroporen werden organische Zusätze von nichtionogenen Detergentien oder Keratin in einer Menge von weniger als 1 Gew.-%, bezogen auf den Feststoff zugesetzt, die unter Zusatz von eingedüster Druckluft im Scherkraftmischer oder Statikmischrohr der Gelmasse zugegeben und gleichmässig verteilt werden. Die entstehende geschäumte, giessfähige Masse wird zu grossflächigen Platten oder Blöcken verformt und bekannterweise in Autoklaven bei Sattdampfatmosphäre oberhalb 16 bar mindestens 4 h ausgehärtet und anschliessend getrocknet.

Anstelle des Schaummittels können zur Erzeugung definierter Makroporen auch geschlossenzellige Leichtzuschläge, wie Perlite, hochschmelzende Gläser, z.B. Cenaspheres aus Flugasche, zugesetzt werden.

Das entstandene Isoliermaterial besitzt eine Rohdichte von 0,15 - 0,5 g/cm³, je nach der Feststoffkonzentration und der Verdichtung der Gelmasse vor dem Dampfhärten. Es ist formstabil, wasserunlöslich und temperaturbeständig bis 1100°C. Seine mittlere Wärmeleitfähigkeit bei 600°C beträgt ca. 0,06 W/mK. Es ist geeignet für Wärmeisolierung von thermischen Anlagen, wie Trocknern, Schmelz- und Brennöfen, Wärmespeichern usw, wie auch für Brandschutzkonstruktionen.

Nachstehend folgen noch einige Herstellungsbeispiele:

### Beispiel 1

58 kg Branntkalk (ca. 96% CaO) werden mit 60 kg Quarzmehl, Feinheit 6000 cm2/g und 200 kg Wasser intensiv vermischt, wobei noch vor Beendigung der Löschreaktion 30 kg Rutilpulver (TiO₂, Korngrösse 0,5 - 5 µ) zugegeben werden. Diese Masse verbleibt in einem isolierten Tank bei ca. 60°C über einen Zeitraum von 12 h. Dann werden in wässriger Lösung 0,5 Keratinlösung zugegeben und die Mischung mit Druckluftzusatz durch ein Statikmischrohr gepresst. Die aufgeschäumte Masse wird in einer Presse mit Siebboden und einer Platte verdichtet. Die Rohplatte wird mit einem Saugheber auf eine Metallunterlage gehoben und anschliessend ohne weitere Behandlung in einem Autoklavbehälter bei 16 bar gehärtet. Dann erfolgt eine Trocknung bis zu einer Restfeuchte von weniger als 2 Gew.-%. Das Schneiden in beliebige Formate erfolgt vor dem Dampfhärten oder nach dem Trocknen. Das Material ist nach dem Trocknen einbaufertig.

### Beispiel 2

Mischung und Herstellung analog Beispiel 1, jedoch wurde anstelle des Schaummittels 20 kg Microcell-Füllstoff, z.B. aus Flugasche ausgewaschene Cenaspheres, zur Erzeugung der Makroporen mit geschlossener Zellstruktur eingemischt.

### Beispiel 3

Mischung und Herstellung analog Beispiel 1 oder 2, jedoch wurden zur Verbesserung der Rohbruch- und Verarbeitungsfestigkeit der wässrigen Rohstoffmischung 2 kg Nadelholzzellstoff zugesetzt.

## Patentansprüche

1. Verfahren zur Herstellung eines Formkörpers für Wärmeisolationszwecke, dessen Matrix aus feinteiligem, hydrothermal erzeugtem Calciumhydrosilikat mit einer spez. Oberfläche von mindestens 20 m²/g besteht und Trübungsmittel enthält, wobei mit Wasserüberschuss gelöschtes Calciumoxid und Kieselsäure, sowie ein feinkörniges Trübungsmittel intensiv vermischt und einer Reaktion unterworfen werden und die dabei aus dem hydrothermal erzeugten feinteiligen Calciumhydrosilikat und dem Trübungsmittel gebildete Matrix in die gewünschte Form gebracht wird, dadurch gekennzeichnet, dass dem bei der genannten Reaktion erhaltenen Werkstoff ein zur Bildung von geschlossenzelligen Makroporen in der Grösse von 5 - 50 µ im Endprodukt geeigneter Stoff gleichmässig verteilt zugesetzt und das Ganze in einer Form derart verdichtet wird, dass der Festkörper des geformten Isoliermaterials eine Mikroporosität im Bereich unter 0,5 µ Porendurchmesser und das die Makroporen enthaltende Isoliermaterial eine Rohdichte von 0,15 - 0,6 g/cm³ erhält.

2. Verfahren nach Anspruch 1, dadurch gekennzeichnet, dass zur Bildung der Makroporen ein organischer Schaumbildner, beispielsweise nicht-ionogene Detergentien oder Keratin, zugegeben wird.

3. Verfahren nach Anspruch 2, dadurch gekennzeichnet, dass der organische Schaumbildner in einer Menge unter 1 Gew.-% der trockenen Feststoffe beigegeben wird.

4. Verfahren nach Anspruch 1, dadurch gekennzeichnet, dass die Bildung der Makroporen durch Zusatz von geschlossenzelligen Leichtzuschlägen, sogenannten Microcells, wie beispielsweise Perlite, hochschmelzende Gläser und dergleichen, erfolgt.

5. Verfahren nach Anspruch 4, dadurch gekennzeichnet, dass die geschlossenzelligen Leichtzuschläge in einer Menge bis zu 50 Gew.-% der trockenen Feststoffe eingebracht werden.

6. Verfahren nach einem der Ansprüche 1-5, dadurch gekennzeichnet, dass dem Grundmaterial verstärkende faserförmige Werkstoffe beigegeben werden.

7. Verfahren nach einem der Ansprüche 1-6, dadurch gekennzeichnet, dass das geformte Isoliermaterial durch eine thermische Nachbehandlung, vorzugsweise oberhalb 700°C, für hohe Einsatztemperaturen schwindungsfrei gemacht wird.

8. Formkörper für Isolationszwecke, hergestellt nach dem Verfahren nach einem der Ansprüche 1-7.

## Claims

1. A process for producing a shaped article for heat insulation applications having a matrix comprising a finely divided hydrothermally produced calcium hydrosilicate with a specific surface of at least 20 m²/g and a turbidity agent, whereby a calcium-oxide hydrated with excess of water and silicic acid as well as a finely divided turbidity agent are intensively mixed and subject to a reaction and the matrix thereby formed of said hydrothermally produced finely divided calcium hydrosilicate and said turbidity agent are brought into the desired form, characterized by adding uniformly distributed to the material obtained by said reaction an agent capable of forming in the final product macropores of closed cells in the size of 5 - 50 µ and by compressing the whole in a form in such a manner that the solid body of the formed insulation material receives a microporosity in the range under 0,5 µ of pore diameter and in that the insulation material containing said macropores has a density of 0,15 - 0,6 g/cm³.

2. Process according to claim 1, characterized in that for building up said macropores an organic foaming agent, e.g. non-ionogene detergents or keratin, is added.

3. Process according to claim 2, characterized in that said organic foaming agent is added in an amount of less than 1 % by weight of the dry solid materials.

4. Process according to claim 1, characterized in that the macropores are built-up by adding closed-cell light-additives, so-called microcells, such as e.g. perlite, high-melting glasses or similar.

5. Process according to claim 4, characterized in that said closed-cell light-additives are added in an amount of up to 50% by weight of the dry solid materials.

6. Process according to any of claims 1-5, characterized in that reinforcing fibrous materials are added to the basic material.

7. Process according to any of claims 1-6, characterized in that the said shaped insulation material is subject to a thermal post-treatment, preferably above 700°C in order to make it non-shrinkable for high application temperatures.

8. A shaped article for insulation applications produced in accordance with any of claims 1-7.

## Revendications

1. Procédé pour fabriquer un corps moulé pour l'application comme isolation calorifuge dont la matrice comprend un hydrosilicate de calcium finement divisé, produit par voie hydrothermale et présentant une surface spécifique d'au moins 20 m²/g et contient un agent de turbidité, dans lequel un oxyde de calcium éteint avec excédent en eau et de l'acide silicique ainsi qu'un agent de turbidité sont intensivement mélangés et soumis a une réaction et la matrice formée du hydrosilicate de calcium finement divisé produit par voie hydrothermale et de l'agent de turbidité étant alors mise dans la forme désirée, caractérisé en ce que l'on ajoute uniformement à la matière obtenue par ladite réaction un agent apte à former dans le produit final des macropores à cellules fermées de l'ordre de grandeur de 5 - 50 µ et en ce que l'on comprime le tout dans un moule de manière à ce que le corps solide du matériel isolant moulé reçoive une microporosité de l'ordre de grandeur plus petit que 0,5 µ de diamètre des pores et que le matériel isolant contenant les macropores ait une masse volumique de 0,15 - 0,6 g/cm³.

2. Procédé selon la revendication 1, caractérisé en ce que l'on ajoute en vue de la formation des macropores un agent moussant organique, par exemple des détergents non-ioniques ou de la kératine.

3. Procédé selon la revendication 2, caractérisé en ce que l'agent moussant organique est ajouté dans une quantité plus petite que 1% en poids des matières solides sèches.

4. Procédé selon la revendication 1, caractérisé en ce que l'on forme les macropores en ajoutant des agrégats légers à cellules fermées, des soit-dits microcells, comme par exemple de la perlite, des verres à haut point de fusion et semblables.

5. Procédé selon la revendication 4, caractérisé en ce que l'on ajoute les agrégats légers à cellules fermées dans une quantité jusqu'à 50% en poids des matières solides sèches.

6. Procédé selon l'une des revendications 1 - 5, caractérisé en ce que l'on ajoute au matériel de base des fibres de renforcement.

7. Procédé selon l'une des revendications 1 - 6, caractérisé en ce que le matériel isolant formé est soumis à un traitement thermique ultérieur, de préférence au-dessus de 700°C, pour le rendre non-rétrécissant à de hautes températures d'utilisation.

8. Corps moulé pour l'application comme isolation fabriqué selon le procédé de l'une des revendications 1 - 7.
